# EUROPÄISCHE PATENTSCHRIFT

(11) **EP 2 731 176 B1**
(45) Veröffentlichungstag und Bekanntmachung des Hinweises auf die Patenterteilung: **01.02.2017**
(21) Anmeldenummer: 13192764.2
(22) Anmeldetag: 13.11.2013
(51) Int. Cl.: H01M 2/38, H01M 2/02, H01M 10/42, H01M 10/06

(54) **Mischelement sowie Akkumulator mit wenigstens einem Mischelement**
Mixing element and accumulator with at least one mixing element
Élément de mélange et accumulateur doté d'au moins un élément de mélange

(30) Priorität: 13.11.2012 DE 102012110897
(43) Veröffentlichungstag der Anmeldung: 14.05.2014
(73) Patentinhaber: Johnson Controls Autobatterie GmbH & Co. KGaA, 30419 Hannover (DE)
(72) Erfinder: Schwab, Julius, 30449 Hannover (DE); Koch, Ingo, 31789 Hameln (DE); Traisigkhachol, Ornwasa, 30952 Ronneberg (DE); Staffeldt, Armin, 27389 Lauenbrück (DE)
(74) Vertreter: Trinks, Ole

(56) Entgegenhaltungen:
- WO-A1-2012/048885
- DE-A1-102010 048 428
- US-A- 5 032 476

## Beschreibung

Die Erfindung betrifft ein Mischelement gemäß dem Oberbegriff des Anspruchs 1. Die Erfindung betrifft außerdem einen Akkumulator gemäß Anspruch 6.

Allgemein betrifft die Erfindung das Gebiet von Akkumulatoren, die mit flüssigem Elektrolyten betrieben werden, d.h. wieder aufladbare elektrochemische Akkumulatoren z.B. in Form von Bleisäureakkumulatoren. Solche Akkumulatoren werden z.B. als Starterbatterien für Kraftfahrzeuge verwendet. Gattungsgemäße Mischelemente sind z.B. aus der WO 2011/029035 A2 oder der DE 10 2010 048 428 A1 bekannt.

Die Druckschrift WO 2012/048885 A1 betrifft einen Akkumulator mit einem Wandelement, welches dazu dient, den Elektrolyten des Akkumulators soweit zu durchmischen, dass eine Säureschichtung aufgehoben oder zumindest deutlich reduziert wird.

Ein weiteres Mischelement, welches zum Einbau in Gehäuse eines mit flüssigem Elektrolyten betriebenen elektro-chemischen Akkumulators eingerichtet ist, ist aus der US 5,032,476 A bekannt.

Der Erfindung liegt die Aufgabe zugrunde, ein hinsichtlich seiner Wirkungseffizienz weiter verbessertes Mischelement anzugeben. Ferner soll ein Akkumulator angegeben werden, bei dem der Effekt der Säureschichtung vermieden oder zumindest deutlich reduziert wird.

Im Hinblick auf das Mischelement wird die der Erfindung zugrunde liegende Aufgabe durch den Gegenstand des unabhängigen Patentanspruchs 1 und im Hinblick auf den Akkumulator durch den Gegenstand des nebengeordneten Patentanspruchs 6 gelöst, wobei vorteilhafte Weiterbildungen der Erfindung in den entsprechenden abhängigen Patentansprüchen angegeben sind.

Demnach betrifft die Erfindung insbesondere ein Mischelement, das zum Einbau in ein Gehäuse eines mit flüssigem Elektrolyten betriebenen elektro-chemischen Akkumulators eingerichtet ist, um den Elektrolyten in Folge von auf den Akkumulator im Betrieb ausgeübten Kräften und/oder Bewegungen zu durchmischen, wobei das Mischelement als an gegenüberliegenden Endbereichen mit jeweils wenigstens einer Öffnung versehener Hohlkörper ausgebildet ist, so dass in dem Hohlkörper ein Kanal gebildet ist, der in den gegenüberliegenden Endbereichen in die jeweilige wenigstens eine Öffnung mündet und

dort umlaufend vom Material des Mischelements berandet ist, wobei das Mischelement im Bereich eines oberen Endbereichs, der dazu eingerichtet ist, beim Einbau in das Gehäuse oberhalb eines gegenüberliegenden unteren Endbereichs angeordnet zu sein, einen Volumenraum aufweist, dessen Umfang erheblich größer ist als der Umfang darunterliegender Abschnitte des Mischelements, so dass die darunterliegenden Abschnitte des Mischelements wenigstens einen im Vergleich zur Querschnittsfläche des Volumenkörpers dünnen Strömungskanal bilden, wobei sich der Umfang des Hohlkörpers im Bereich des dünnen Strömungskanals unterhalb eines Übergangs von dem Volumenraum in den dünnen Strömungskanal in Richtung zum unteren Endbereich hin verringert.

Soweit von den Begriffen "oben" und "unten" Gebrauch gemacht wird, beziehen sich diese Angaben auf die spezifikationsgemäße Betriebslage des Akkumulators, d.h. eine im Wesentlichen horizontale Lage, bei der der Akkumulator-Deckel sowie dessen Einfüllöffnungen für den flüssigen Elektrolyten oben liegend sind. Bei einer üblichen, spezifikationsgemäßen Bewegungsbeanspruchung des Akkumulators ist eine gewisse Abweichung von der Horizontallage zulässig, wie es z.B. beim Betrieb eines Akkumulators in einem Kraftfahrzeug auftritt. Nicht spezifikationsgemäße Betriebslagen sind beispielsweise um 90° oder 180° gegenüber der Horizontallage gedrehte Lagen.

Die Erfindung hat den Vorteil, dass mit dem erfindungsgemäßen Mischelement das gewünschte Durchmischen des Elektrolyten weiter verbessert wird. Hierdurch kann eine Säureschichtung in dem Akkumulator aufgehoben oder zumindest deutlich reduziert werden. Als Säureschichtung bezeichnet man unterschiedliche Säuredichten über die Höhe des Akkumulators. Das erfindungsgemäße Mischelement erlaubt ein Durchmischen des Elektrolyten mit höherer Wirkungseffizienz in Folge der Umfangsverringerung und der damit verbundenen Verringerung des Strömungsquerschnitts des Hohlkörpers im Bereich des dünnen Strömungskanals. Das erfindungsgemäße Mischelement erzeugt schon bei geringerer Bewegungsbeanspruchung des Akkumulators vergleichbare Durchmischeffekte wie Mischelemente aus dem Stand der Technik.

Das Mischelement kann z.B. aus Polypropylen oder einem anderen geeigneten Material, das flexibel und säurebeständig ist, hergestellt sein.

Das erfindungsgemäße Mischelement kann hinsichtlich seiner Höhe, d.h. seiner Längserstreckung in Vertikalrichtung in der vorgesehenen Einbaulage in den Akkumulator, so ausgebildet sein, dass sich ein zyklischer Umlauf des Elektrolyten bei Bewegungsbeanspruchung des Akkumulators derart ergibt, dass Elektrolyt über die Oberkante des Mischelements hinüberschwappt und über die untere Öffnung wieder abläuft, wie es z.B. in US 5,096,787 beschrieben ist. In diesem Fall hat das Mischelement die Funktion einer hydrostatischen Pumpe.

Gemäß einer vorteilhaften Weiterbildung der Erfindung erstreckt sich das Mischelement mindestens soweit nach oben, dass bei spezifikationsgemäßer Bewegungsbeanspruchung des Akkumulators, wie sie z.B. bei einem fahrenden Fahrzeug auftritt, ein Überfließen von flüssigem Elektrolyten über den oberen Randbereich des Mischelements verhindert ist. Hierdurch kann vorteilhaft das Prinzip von kommunizierenden Röhren realisiert werden. Es wird eine Hin- und Herbewegung des Elektrolyten über eine kommunizierende Verbindung im unteren Bereich des Mischelements, d.h. durch die untere Öffnung, zwischen dem Volumenraum des Mischelements und dem umgebenden Zellraum des Akkumulators erzwungen und nicht, wie beim Prinzip der hydrostatischen Pumpe, ein Umwälzen des Elektrolyten. Dies hat den Vorteil, dass am Boden des Akkumulators angesammelter Schlamm dort verbleibt, da keine Umwälzung des Elektrolyten erfolgt. Die hierdurch erzwungene Elektrolytbewegung ist ausreichend, um den Elektrolyten soweit durchzumischen, dass eine Säureschichtung aufgehoben oder zumindest deutlich reduziert wird.

Die kommunizierende Verbindung im unteren Bereich des Mischelements, d.h. die untere Öffnung, durch den der flüssige Elektrolyt hindurchströmen kann, kann auf unterschiedliche Weise ausgestaltet sein, z.B. in Form eines Spalts oder in Form einer oder mehrerer Öffnungen im unteren Bereich des Mischelements. Die zuvor erwähnten Öffnungen können an verschiedenen Stellen des Mischelements angeordnet sein, vorzugsweise natürlich im unteren Bereich des Strömungskanals.

Gemäß einer vorteilhaften Weiterbildung der Erfindung ist das Mischelement als separates Bauteil hergestellt, das erst bei der Montage des Akkumulators in dessen Gehäuse eingesetzt wird. Das Mischelement kann z.B. als in einen Zellraum des Akkumulators einsteckbares Bauteil ausgebildet sein. Dies hat den Vorteil, dass das Mischelement separat hergestellt werden kann und bei Bedarf in den Zellraum eines Akkumulators eingesteckt werden kann. Auf diese Weise können auf kostengünstige Weise sowohl Akkumulatoren mit dem Mischelement als auch ohne das Mischelement hergestellt werden, ohne dass unterschiedliche Spritzgussformen für die Herstellung der Gehäuseteile der zwei Varianten des Akkumulators erforderlich wären, wie dies bei einem fest angeformten Wandelements erforderlich wäre. Zudem können auch Akkumulatoren aus bisheriger Serienfertigung in einfacher Weise, d.h. ohne große Aufwendungen bezüglich der Herstellungseinrichtungen, umgestellt werden auf Akkumulatoren mit integrierter Durchmischung in Form eines Mischelements.

Das Mischelement kann insbesondere als ringförmiger Hohlkörper ausgebildet sein, wobei als Ringform in diesem Fall nicht ausschließlich eine Kreisringform verstanden wird, sondern auch jegliche anders geformte Ringformen. Das Mischelement kann z.B. als mit Ausnahme der in den gegenüberliegenden Endbereichen vorgesehenen Öffnungen im Wesentlichen geschlossener Hohlkörper ausgebildet sein. Dies erlaubt eine einfache Herstellung des Mischelements, z.B. aus einem Kunststoffmaterial.

Vorteilhaft kann das Mischelement z.B. im Spritzgussverfahren mit einem Innendorn und einer Außenform hergestellt werden. Das Mischelement kann auch im Blasverfahren oder im Tiefziehverfahren als Hohlkörper hergestellt werden. Der sich hinsichtlich des Umfangs in Richtung zum unteren Endbereich hin verjüngende dünne Strömungskanal hat in diesem Zusammenhang den weiteren Vorteil, dass die Entformbarkeit des Mischelements beim Herstellprozess verbessert wird.

Gemäß der Erfindung verläuft die Umfangsverringerung im Bereich des dünnen Strömungskanals über die Längserstreckung des Mischelements diskontinuierlich mit mehreren Diskontinuitäten. Hieraus resultiert eine Art stufenartige Verringerung des Umfangs des Hohlkörpers. Hierdurch kann die Wirkungseffizienz des Mischelements hinsichtlich des durch Durchmischungseffekts des flüssigen Elektrolyten weiter verbessert werden. Durch das Vorsehen von mehreren Diskontinuitäten im Verlauf des Strömungskanals ergeben sich abgestuft mehrere Übergänge des Strom ungswiderstands und damit der Verlangsamung oder Beschleunigung des Austauschs des Elektrolyten zwischen dem Volumenraum des Mischelements und dem Innenraum des Akkumulators. Vorteilhaft können im Bereich des dünnen Strömungskanals z.B. zwei oder drei solche Diskontinuitäten vorgesehen werden. Auch die Entformbarkeit des Mischelements beim Herstellprozess wird durch die Diskontinuitäten weiter verbessert.

Gemäß einer vorteilhaften Weiterbildung der Erfindung verlaufen mehrere Diskontinuitäten über die Längserstreckung des Mischelements linear, d.h. je nach Ausführungsform verläuft in diesen Bereichen die Umfangsverringerung oder die Querschnittsverringerung linear. Dies erlaubt eine einfache und kostengünstige Herstellung des Mischelements. Außerdem wird die mechanische Stabilität des dünnen Strömungskanals verbessert.

Gemäß einer vorteilhaften Weiterbildung der Erfindung weist das Mischelement wenigstens zwei voneinander getrennte dünne Strömungskanäle auf, die mit dem gemeinsamen Volumenraum verbunden sind. Es können einer, mehrere oder alle der voneinander getrennten dünnen Strömungskanäle gemäß den zuvor erwähnten Merkmalen des dünnen Strömungskanals ausgebildet sein, insbesondere mit einer oder mehreren Diskontinuitäten.

Gemäß einer vorteilhaften Weiterbildung der Erfindung weist das Mischelement zumindest an einer Seite des Hohlkörpers eine Einbuchtung auf, die in Längsrichtung des Mischelements verläuft und zur Aufnahme einer Gehäuserippe des Akkumulators eingerichtet ist. Dies erlaubt eine einfache und sichere mechanische Befestigung des Mischelements in dem Akkumulatorgehäuse, sofern dieses mit inneren Gehäuserippen ausgebildet ist. In diesem Fall sind keine zusätzlichen mechanischen Fixierungsmittel erforderlich. Die Einbuchtung kann insbesondere im Bereich des Volumenraums vorgesehen sein bzw. sich bis in diesen Raum erstrecken, so dass der Volumenraum geteilt ist.

Gemäß einer vorteilhaften Weiterbildung der Erfindung ist die Tiefe der Einbuchtung wenigstens so groß wie die Erstreckung des dünnen Strömungskanals in derselben Richtung, d.h. in Ersteckungsrichtung der Einbuchtung. Dies erlaubt eine besonders robuste mechanische Fixierung des Mischelements an der Gehäuserippe des Gehäuses des Akkumulators. Außerdem werden hierdurch wenigstens zwei getrennte dünne Strömungskanäle geschaffen.

Die Eingangs genannte Aufgabe wird gemäß Anspruch 7 gelöst durch einen Akkumulator mit einem Gehäuse, in dem wenigstens eine Akkumulatorzelle gebildet ist, wobei die Akkumulatorzelle eine Vielzahl von plattenförmigen Elektroden, die nebeneinander in der Akkumulatorzelle angeordnet sind, sowie flüssigen Elektrolyten aufweist, wobei in der Akkumulatorzelle zusätzlich in einem Freiraum wenigstens ein Mischelement der zuvor beschriebenen Art angeordnet ist. Bei dem erfindungsgemäßen Akkumulator wird bereits bei vergleichsweise geringer Bewegungsbeanspruchung ein hoher Durchmischungseffekt erzeugt und damit die Säureschichtung vermieden oder zumindest wesentlich reduziert.

Gemäß einer vorteilhaften Weiterbildung der Erfindung ist das Mischelement seitlich von einer flachen Seite einer plattenförmigen Elektrode in der Akkumulatorzelle angeordnet. Das Mischelement wird hierdurch nicht von den hervorstehenden, zusammengeschweißten Enden der Separatortaschen kraftbeaufschlagt bzw. gehalten, wie in DE 10 2010 048 428 A1 beschrieben, da es an der flachen Seite der plattenförmigen Elektrode angeordnet ist. Gemäß einer vorteilhaften Weiterbildung der Erfindung kann als Haltemittel zur mechanischen Fixierung des Mischelements in der Akkumulatorzelle ein in das Gehäuse des Akkumulators integriertes Bauteil vorgesehen sein. Insbesondere kann eine innere Gehäuserippe des Gehäuses des Akkumulators als Haltemittel genutzt werden.

Das Mischelement kann auch mit einem bekannten Fügeverfahren, z.B. Kunststoff-Schweißen, mit dem Gehäuse des Akkumulators bzw. der inneren Gehäuserippe verbunden sein und hierdurch lagefixiert sein.

Gemäß einer vorteilhaften Weitebildung der Erfindung ist das Mischelement zwischen einer plattenförmigen Elektrode und der Gehäusewand oder einer an der Gehäusewand gebildeten inneren Gehäuserippe angeordnet.

Gemäß einer vorteilhaften Weitebildung der Erfindung weist das Gehäuse eine Längserstreckung auf, die die größte Abmessung der Maße Höhe, Breite und Länge des Gehäuses ist, und die Elektrodenplatten weisen eine Längserstreckung auf, die die größte Abmessung der Maße Höhe, Breite und Länge der einzelnen Elektrodenplatte ist, und die Elektrodenplatten in einer Akkumulatorzelle sind derart ausgerichtet, dass die Längserstreckung der Elektrodenplatten im Wesentlichen in Richtung der Längserstreckung des Gehäuses verläuft. Dies erlaubt eine günstige, den vorhandenen Bauraum gut ausnutzende Unterbringung einer hohen Zahl von Elektrodenplatten in dem Gehäuse bei gleichzeitiger günstiger Unterbringung von einem oder mehreren Mischelementen in dem Gehäuse.

Die Erfindung wird nachfolgend anhand von Ausführungsbeispielen unter Verwendung von Zeichnungen näher erläutert.

Es zeigen
- Figur 1: einen Akkumulator mit einem Mischelement in Querschnittsansicht und
- Figuren 2 und 3: den Akkumulator gemäß Figur 1 bei Bewegungsbeanspruchung und
- Figuren 4 bis 6: eine erste Ausführungsform eines Mischelements und
- Figuren 7 bis 9: eine zweite Ausführungsform eines Mischelements und
- Figuren 10 bis 12: eine dritte Ausführungsform eines Mischelements und
- Figuren 13 bis 15: eine vierte Ausführungsform eines Mischelements und
- Figur 16: einen Akkumulator in Draufsicht.

In den Figuren werden gleiche Bezugszeichen für einander entsprechende Elemente verwendet. In sämtlichen Figuren wird der Akkumulator ohne Deckelteil dargestellt, d.h. in einem Zustand, in dem der Akkumulator an der Oberseite noch geöffnet ist. Zum Abschluss der Produktion erfolgt im Normalfall ein Verschließen des Akkumulatorgehäuses mit einem Deckelteil in der üblichen Weise.

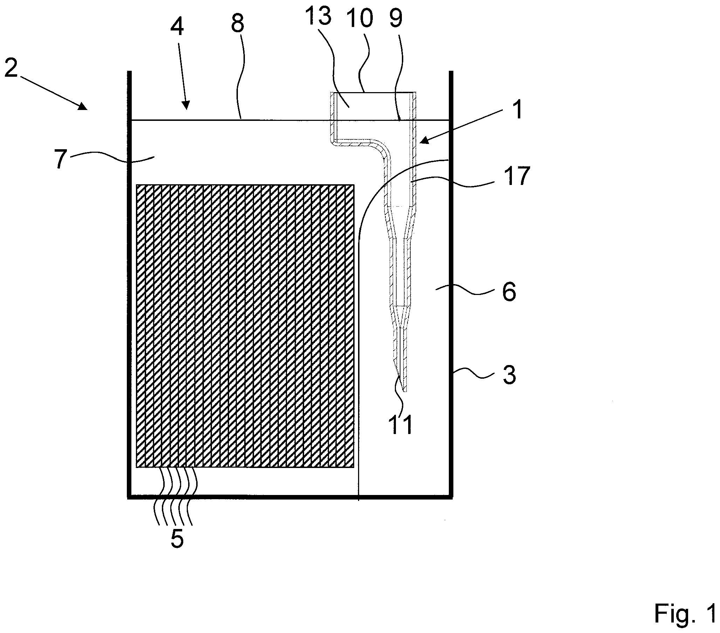

Die Figur 1 zeigt einen Akkumulator 2, in dessen Gehäuse 3 ein Mischelement 1 angeordnet ist. In dem Gehäuse 3 bzw. einem Zellraum 4 des Gehäuses sind außerdem Elektrodenplatten 5 angeordnet, die zum Teil mit nicht dargestellten Separatoren umgeben sind. Außerdem befindet sich in dem Gehäuse 3 bzw. dem Zellraum 4 flüssiger Elektrolyt 7, wobei der Elektrolyt 7 bis zu einem Pegel 8 eingefüllt ist. Ferner befindet sich in dem Gehäuse 3 bzw. in dem Zellraum 4 eine Gehäuserippe 6. Das Mischelement 1 ist an der Gehäuserippe 6 befestigt, z.B. darauf aufgeklemmt.

Wie erkennbar ist, weist das Mischelement 1 im oberen Endbereich einen Volumenraum 13 auf, der nach unten hin in einen dünnen Strömungskanal 17 übergeht, der eine vergleichsweise wesentlich geringere Querschnittsfläche aufweist als der Volumenraum 13. Der Strömungskanal 17 endet in einem unteren Bereich des Mischelements in einer oder mehreren Öffnungen 11. Der Volumenraum 13 ist nach oben hin ebenfalls offen, d.h. dort befindet sich eine Öffnung 10. Wegen der oberen und der unteren Öffnungen 10, 11 ist jederzeit ein Druckausgleich zwischen dem Innenraum des Mischelements 1 und dem umgebenden Raum des Akkumulatorgehäuses 3 möglich. Es stellt sich in dem Mischelement 1 daher ein Elektrolytpegel 9 ein, der dem Elektrolytpegel 8 des Akkumulators 2 bzw. des jeweiligen Zellraums 4 entspricht.

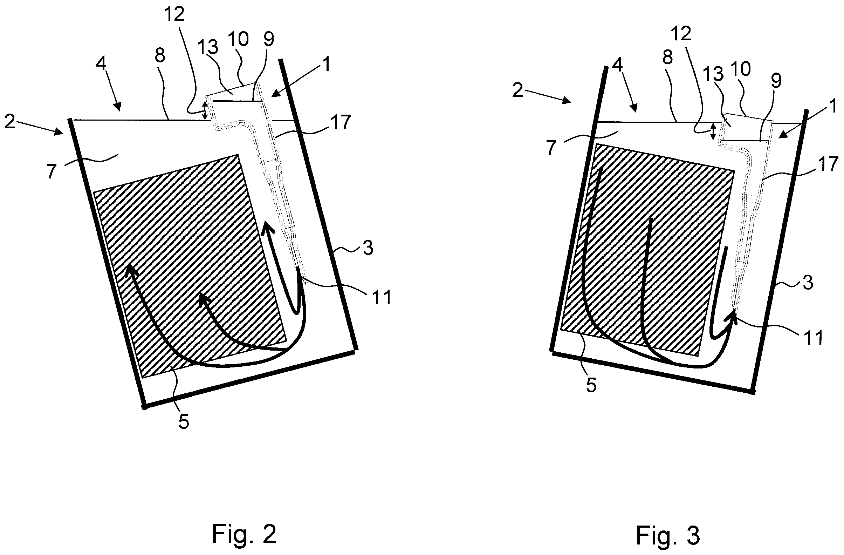

Die Figuren 2 und 3 zeigen die Funktion des Mischelements 1 bei einer Bewegungsbeanspruchung des Akkumulators 2. Gemäß Figur 2 wird der Akkumulator um einen bestimmten Winkel nach links gekippt. Aus den ursprünglich gleich hohen Pegeln 8, 9 ergibt sich aufgrund dieser Kippung zunächst eine Pegeldifferenz 12, da der im Mischelement 1 gespeicherte Elektrolyt durch den dünnen Strömungskanal 17 nur verzögert ausfließen kann. Das Ausfließen des Elektrolyten in den Zellraum 4 des Akkumulators wird durch die Pfeile dargestellt. Es sei nun angenommen, dass der Ausgleichsvorgang des gemäß Figur 2 nach links gekippten Akkumulators abgeschlossen ist, so dass der Pegel 9 im Mischelement wieder dem Pegel 8 entspricht. Sodann sei angenommen, dass der Akkumulator nun z.B. etwas nach rechts gekippt wird, wie in Figur 3 dargestellt ist. Es ergibt sich erneut eine Pegeldifferenz 12 zwischen den Pegeln 8, 9, diesmal jedoch in umgekehrter Richtung, d.h. gemäß Figur 3 ist der Pegel 9 niedriger als der Pegel 8. Dies führt dazu, dass durch die Öffnung 11 wieder Elektrolyt in das Mischelement 1 zurückströmt, wie durch die Pfeile dargestellt ist. Hierdurch wird ein Durchmischen des Elektrolyten erreicht und damit die Säureschichtung vermieden oder reduziert. Vorteilhaft ist das Mischelement 1 dabei hinsichtlich der Wandhöhe des Volumenraums 13 so hoch gebaut, dass ein Überschwappen von Elektrolyten bei normaler Bewegungsbeanspruchung über die Oberkante des Mischelements 1 direkt in den Volumenraum 13 vermieden wird. Ein solches Überschwappen wird bei spezifikationsgemäßer Befüllung des Akkumulators bis zu einem Kippwinkel von 20° gegenüber der Horizontalen gewährleistet. In einer weiteren Ausgestaltung wird das Überschwappen des Elektrolyten bis zu einem Kippwinkel von 35° gegenüber der Horizontalen gewährleistet.

Die Bewegungsbeanspruchung des Akkumulators 2 wird im Alltagsbetrieb, d.h. wenn der Akkumulator 2 in einem Fahrzeug eingebaut ist, z.B. durch die Fahrzeugbewegungen hervorgerufen. Außer den Fahrzeugbewegungen, die durch Fahrbahnunebenheiten hervorgerufen werden, führen auch Längs- und Querbeschleunigungen, z.B. bei Kurvenfahrt, zur beschriebenen Bewegungsbeanspruchung des Akkumulators 2.

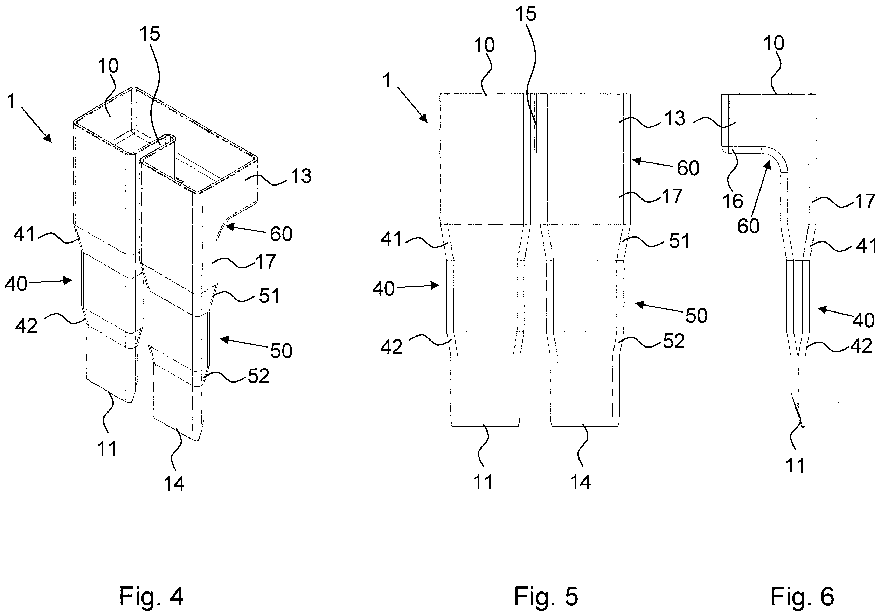

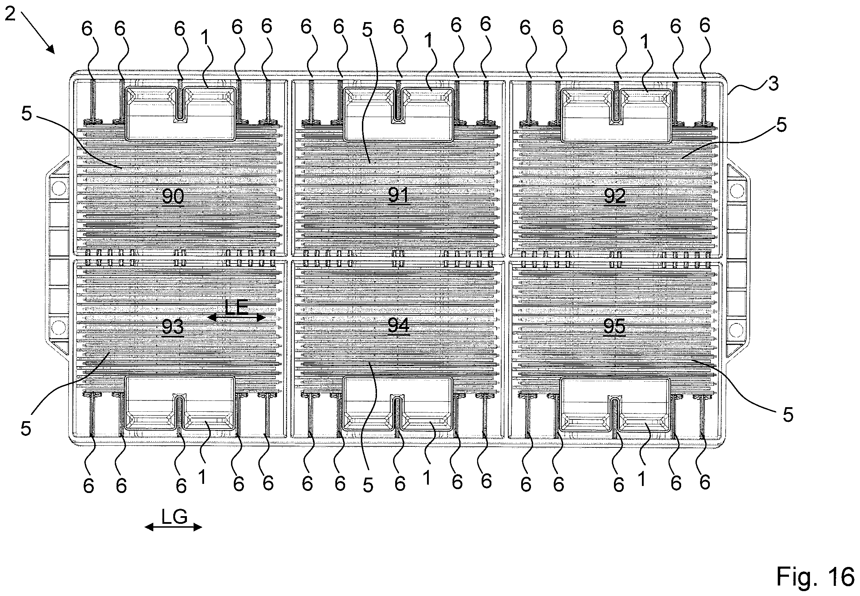

Die Figuren 4 bis 6 zeigen eine erste Ausführungsform des Mischelements 1. Die Figur 4 zeigt dabei eine isometrische Ansicht, die Figur 5 eine rückseitige Ansicht und die Figur 6 eine Seitenansicht. Wie erkennbar ist, weist das Mischelement 1 eine Einbuchtung 15 auf, die den Volumenraum 13 in zwei Teilräume unterteilt, die jedoch mit relativ großem Querschnitt miteinander verbunden sind. Die Einbuchtung 15 kann zur Montage des Mischelements 1 auf der Gehäuserippe 6 dienen, wie in Figur 1 und Figur 16 erkennbar ist. Das Mischelement kann einfach auf die Gehäuserippe aufgesteckt werden und klemmt dann mittels der Einbuchtung 15 darauf fest.

Der Volumenraum 13 ist nach unten hin durch einen Boden 16 begrenzt. Der Volumenraum 13 ist nach oben hin durch die Öffnung 10 offen ausgebildet. Der Volumenraum 13 geht unterhalb des Bodens 16 in einem Übergangsbereich 60 über in einen dünnen Strömungskanal 17, der sich nach unten hin bis zu einer Öffnung 11 hin erstreckt. Wegen der Teilung durch die Einbuchtung 15 teilt sich der dünne Strömungskanal 17 in zwei Teilkanäle 40, 50 auf, die jeweilige untere Öffnungen 11, 14 aufweisen. Die Öffnungen 11, 14 können als einzelne Öffnungen oder als Kombination mehrerer Öffnungen ausgebildet sein. Das Mischelement kann im Bereich der Öffnungen 11, 14 gerade oder, wie in den Figuren erkennbar ist, mit einer Abschrägung enden.

Wie ferner in den Zeichnungen erkennbar ist, weist der dünne Strömungskanal 17 bzw. die Teilkanäle 40, 50 unterhalb des Übergangs 60 zwei linear verlaufende Diskontinuitäten 41, 42, 51, 52 auf. Durch diese Diskontinuitäten verringert sich der Umfang und damit auch die innere Querschnittsfläche des Hohlkörpers zweifach in Richtung des unteren Endbereichs hin zu der Öffnung 11, 14.

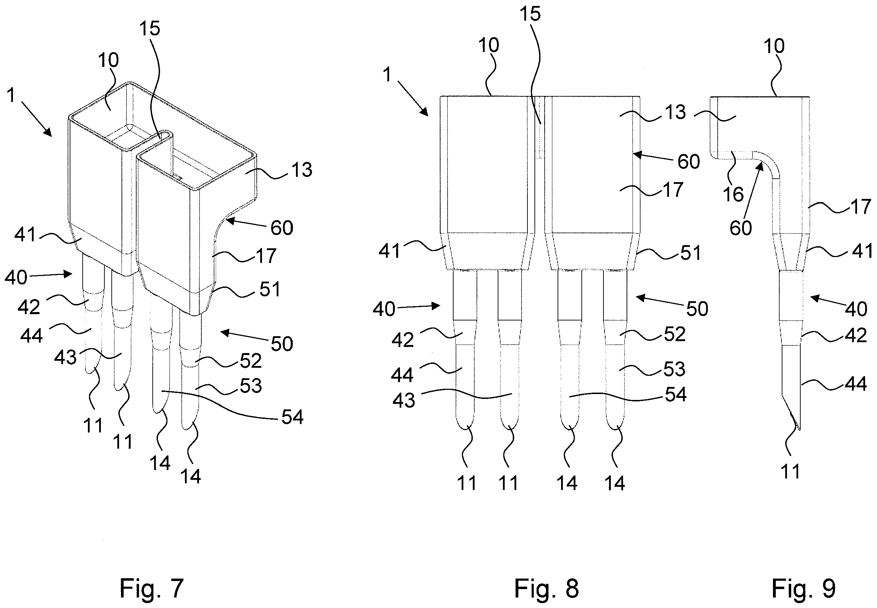

Die Figuren 7 bis 9 zeigen eine zweite Ausführungsform des Mischelements 1. Die Figur 7 zeigt eine isometrische Ansicht, die Figur 8 eine rückwärtige Ansicht und die Figur 9 eine Seitenansicht. Im Unterschied zu dem Mischelement gemäß den Figuren 4 bis 6 weist das hier dargestellte Mischelement 1 in den unteren Bereichen der Strömungskanäle 40, 50 jeweils weiter aufgeteilte Teilkanäle 43, 44, 53, 54 auf, z.B. in Form von Kanälen mit kreisförmigem Querschnitt. Jeder der Teilkanäle 43, 44, 53, 54 weist eine eigene umfangsverringernde Diskontinuität 42, 52 sowie eine untere Öffnung 11, 14 auf.

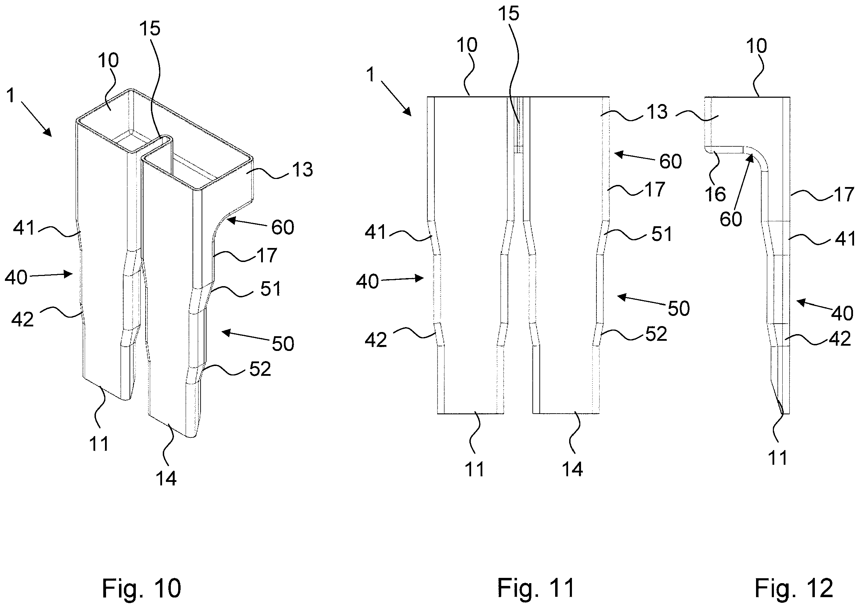

Die Figuren 10 bis 12 zeigen eine dritte Ausführungsform des Mischelements 1. Die Figur 10 zeigt eine isometrische Ansicht, die Figur 11 eine rückwärtige Ansicht und die Figur 12 eine Seitenansicht. Die Ausführungsform gemäß den Figuren 10 bis 12 entspricht derjenigen der Figuren 4 bis 6, mit dem Unterschied, dass die Rückseite des Wandelements 1, von der aus die Einbuchtung 15 ausgeht, eben ausgebildet ist. Insbesondere die Diskontinuitäten 41, 42, 51, 52 sind nur seitlich an den Strömungskanälen 40, 50 und an der Vorderseite, an der der Volumenraum 13 vorsteht, ausgebildet.

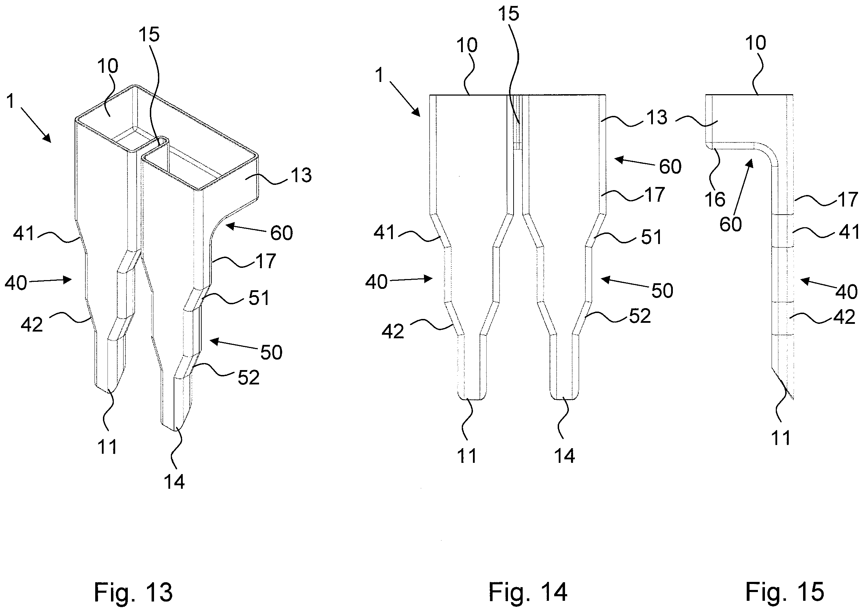

Die Figuren 13 bis 15 zeigen eine vierte Ausführungsform des Mischelements. Die Figur 13 zeigt eine isometrische Ansicht, die Figur 14 eine rückwärtige Ansicht und die Figur 15 eine Seitenansicht. Im Unterschied zur Ausführungsform der Figuren 10 bis 12 sind die Strömungskanäle 40, 50 nun auch an der Vorderseite eben ausgebildet, d.h. die Diskontinuitäten 41, 42, 51, 52 sind nur seitlich an den Strömungskanälen 40, 50 vorgesehen.

Die Figur 16 zeigt einen sechszelligen Akkumulator 2 in Draufsicht, wobei wiederum der Deckel des Akkumulators noch nicht aufgesetzt ist. Erkennbar sind daher die sechs einzelnen Zellräume 90, 91, 92, 93, 94, 95 sowie die darin angeordneten Elektrodenplatten 5. Erkennbar ist, dass die Elektrodenplatten 5 sich hinsichtlich ihrer größten Abmessung LE in der gleichen Richtung erstrecken wie die größte Abmessung LG des Gehäuses 3 des Akkumulators 2. Erkennbar ist ferner, dass das Gehäuse 3 Gehäuserippen 6 aufweist. Beispielhaft ist ein auf eine Gehäuserippe 6 aufgestecktes Mischelement 1 in jedem Zellraum 90, 91, 92, 93, 94, 95 dargestellt.

## Patentansprüche

1. Mischelement (1), das zum Einbau in ein Gehäuse (3) eines mit flüssigem Elektrolyten (7) betriebenen elektrochemischen Akkumulators (2) eingerichtet ist, um den Elektrolyten (7) in Folge von auf den Akkumulator (2) im Betrieb ausgeübten Kräften und/oder Bewegungen zu durchmischen, wobei das Mischelement (1) als an gegenüberliegenden Endbereichen mit jeweils wenigstens einer Öffnung (10, 11, 14) versehener Hohlkörper ausgebildet ist, so dass in dem Hohlkörper ein Kanal gebildet ist, der in den gegenüberliegenden Endbereichen in die jeweilige wenigstens eine Öffnung (10, 11, 14) mündet und dort umlaufend vom Material des Mischelements (1) berandet ist, wobei das Mischelement (1) im Bereich eines oberen Endbereichs, der dazu eingerichtet ist, beim Einbau in das Gehäuse (3) oberhalb eines gegenüberliegenden unteren Endbereichs angeordnet zu sein, einen Volumenraum (13) aufweist, dessen Umfang größer ist als der Umfang darunterliegender Abschnitte des Mischelements (1), so dass die darunterliegenden Abschnitte des Mischelements (1) wenigstens einen Strömungskanal (17) bilden, dessen Querschnittsfläche im Vergleich zur Querschnittsfläche des Volumenraumes (13) verkleinert ist,
**dadurch gekennzeichnet, dass**
sich der Umfang des Hohlkörpers im Bereich des Strömungskanals (17) unterhalb eines Übergangs (60) von dem Volumenraum (13) in den Strömungskanal (17) in Richtung zum unteren Endbereich hin durch das Vorsehen von mindestens zwei Diskontinuitäten verringert, sodass sich im Verlauf des Strömungskanals (17) mindestens zwei Übergänge des Strömungswiderstands des Elektrolyten (7) ergeben.

2. Mischelement nach Anspruch 1, wobei die Umfangsverringerung in den mindestens zwei Übergängen über die Längserstreckung des Mischelements (1) linear verlaufen.

3. Mischelement nach Anspruch 1 oder 2, wobei das Mischelement (1) wenigstens zwei voneinander getrennte dünne Strömungskanäle (40, 50, 43, 44, 53, 54) aufweist, die mit dem gemeinsamen Volumenraum (13) verbunden sind.

4. Mischelement nach einem der vorhergehenden Ansprüche, wobei das Mischelement (1) als im Spritzgussverfahren mit einem Innendorn und einer Außenform, im Blasverfahren oder im Tiefziehverfahren hergestellter Hohlkörper ausgebildet ist.

5. Mischelement nach einem der vorhergehenden Ansprüche, wobei das Mischelement (1) zumindest an einer Seite des Hohlkörpers eine Einbuchtung (15) aufweist, die in Längsrichtung des Mischelements (1) verläuft und zur Aufnahme einer Gehäuserippe (6) des Gehäuses (3) des Akkumulators (2) eingerichtet ist.

6. Akkumulator (2) mit einem Gehäuse (3), in dem wenigstens eine Akkumulatorzelle (90, 91, 92, 93, 94, 95) gebildet ist, wobei die Akkumulatorzelle (90, 91, 92, 93, 94, 95) eine Vielzahl von plattenförmigen Elektroden (5), die nebeneinander in der Akkumulatorzelle angeordnet sind, sowie flüssigen Elektrolyten (7) aufweist, Wobei in der Akkumulatorzelle (90, 91, 92, 93, 94, 95) zusätzlich in einem Freiraum wenigstens ein Mischelement (1) nach einem der vorhergehenden Ansprüche angeordnet ist.

7. Akkumulator nach Anspruch 6, **dadurch gekennzeichnet, dass** das Mischelement (1) seitlich von einer flachen Seite einer plattenförmigen Elektrode (5) in der Akkumulatorzelle (90, 91, 92, 93, 94, 95) angeordnet ist.

8. Akkumulator nach Anspruch 6 oder 7, wobei das Mischelement (1) zwischen einer plattenförmigen Elektrode (5) und der Gehäusewand oder einer an der Gehäusewand gebildeten inneren Gehäuserippe (6) angeordnet ist.

9. Akkumulator nach einem der Ansprüche 6 bis 8, wobei das Gehäuse (3) eine Längserstreckung (LG) aufweist, die die größte Abmessung der Maße Höhe, Breite und Länge des Gehäuses (3) ist, die Elektrodenplatten (5) eine Längserstreckung (LE) aufweisen, die die größte Abmessung der Maße Höhe, Breite und Länge der einzelnen Elektrodenplatte (5) ist, und die Elektrodenplatten (5) in einer Akkumulatorzelle (90, 91, 92, 93, 94, 95) derart ausgerichtet sind, dass die Längserstreckung (LE) der Elektrodenplatten (5) im Wesentlichen in Richtung der Längserstreckung (LG) des Gehäuses (3) verläuft.

10. Akkumulator nach einem der Ansprüche 6 bis 9, wobei sich das Mischelement (1) mindestens so weit nach oben erstreckt, dass bei spezifikationsgemäßer Bewegungsbeanspruchung des Akkumulators (2) ein Überfließen von flüssigem Elektrolyten (7) über den oberen Randbereich des Mischelements (1) verhindert ist.

## Claims

1. A mixing element (1) designed to be installed in a housing (3) of an electrochemical accumulator (2) operating with liquid electrolyte (7) in order to mix the electrolyte (7) in consequence of forces and/or motion exerted on the accumulator (2) during operation, wherein the mixing element (1) is designed as a hollow body provided with at least one opening (10, 11, 14) at respective opposite end regions such that a channel is formed in the hollow body which leads into the respective at least one opening (10, 11, 14) in the opposite end regions and is circumferentially delineated there by the material of the mixing element (1), wherein the mixing element (1) comprises a volumetric space (13) in the area of an upper end region which is designed to be arranged above an opposite lower end region when installed in the housing (3) and be of substantially larger circumference than the circumference of the sections of the mixing element (1) underneath such that the sections of the mixing element (1) underneath form at least one flow channel (17) of lesser cross-sectional area compared to the cross-sectional area of the volumetric space (13),
**characterized in that**
the circumference of the hollow body decreases toward the lower end region in the area of the flow channel (17) below a transition (60) from the volumetric space (13) to the flow channel (17) due to at least two discontinuities being provided such that there are at least two transitions for the flow resistance of the electrolyte (7) along the course of the flow channel (17).

2. The mixing element according to claim 1,
wherein the circumferential reduction in the at least two transitions along the longitudinal extension of the mixing element (1) is linear.

3. The mixing element according to claim 1 or 2,
wherein the mixing element (1) comprises at least two separate thin flow channels (40, 50, 43, 44, 53, 54) connected to the common volumetric space (13).

4. The mixing element according to any one of the preceding claims,
wherein the mixing element (1) is designed as a hollow body produced in an injection molding process by means of a die insert and an outer mold, or in a blow process or deep-drawing process.

5. The mixing element according to any one of the preceding claims,
wherein the mixing element (1) comprises an indentation (15) on at least one side of the hollow body which extends in the longitudinal direction of the mixing element (1) and which is configured to receive a housing rib (6) of the housing (3) of the accumulator (2).

6. An accumulator (2) having a housing (3) in which at least one accumulator cell (90, 91, 92, 93, 94, 95) is formed, wherein the accumulator cell (90, 91, 92, 93, 94, 95) comprises a plurality of plate-shaped electrodes (5) arranged adjacently within said accumulator cell as well as liquid electrolyte (7), wherein at least one mixing element (1) according to any one of the preceding claims is additionally arranged in a free space within the accumulator cell (90, 91, 92, 93, 94, 95).

7. The accumulator according to claim 6,
**characterized in that**
the mixing element (1) is laterally arranged on the flat side of a plate-shaped electrode (5) in the accumulator cell (90, 91, 92, 93, 94, 95).

8. The accumulator according to claim 6 or 7,
wherein the mixing element (1) is arranged between a plate-shaped electrode (5) and the housing wall or an interior housing rib (6) formed on the housing wall.

9. The accumulator according to any one of claims 6 to 8,
wherein the housing (3) exhibits a longitudinal extension (LG) having the largest dimension of the height, width and length measures of the housing (3), the electrode plates (5) exhibit a longitudinal extension (LE) having the largest dimension of the height, width and length measures of the individual electrode plate (5), and the electrode plates (5) in an accumulator cell (90, 91, 92, 93, 94, 95) are configured such that the longitudinal extension (LE) of the electrode plates (5) runs substantially in the direction of the longitudinal extension (LG) of the housing (3).

10. The accumulator according to any one of claims 6 to 9,
wherein the mixing element (1) extends at least as far upward as to prevent liquid electrolyte (7) from spilling over the upper edge region of the mixing element (1) upon specification-compliant motion load on the accumulator (2).

## Revendications

1. Élément de mélange (1) conçu pour être intégré dans un boîtier (3) d'un accumulateur électrochimique (2) fonctionnant avec un électrolyte liquide (7), afin de mélanger l'électrolyte (7) suite à des efforts et/ou des mouvements exercés sur l'accumulateur (2) pendant le fonctionnement, l'élément de mélange (1) étant réalisé sous forme de corps creux pourvu d'au moins une ouverture (10, 11, 14) respective dans des zones d'extrémité opposées, de telle sorte qu'un canal se forme dans le corps creux, qui débouche dans les zones d'extrémité opposées dans ladite au moins une ouverture respective (10, 11, 14) et y est bordé en périphérie par le matériau de l'élément de mélange (1), l'élément de mélange (1) présentant un volume (13) au niveau d'une zone d'extrémité supérieure, conçue pour être disposée au-dessus d'une zone d'extrémité inférieure opposée, lors du montage dans le boîtier (3), volume dont le périmètre est supérieur au périmètre de portions de l'élément de mélange (1) qui se trouvent au-dessous, de telle sorte que les portions de l'élément de mélange (1) qui se trouvent au-dessous forment au moins un canal d'écoulement (17) dont l'aire de section transversale est diminuée par rapport à l'aire de section transversale du volume (13),
**caractérisé en ce que**
le périmètre du corps creux se réduit dans la zone du canal d'écoulement (17) au-dessous d'une transition (60) allant du volume (13) vers le canal d'écoulement (17) en direction de la zone d'extrémité inférieure par la réalisation d'au moins deux discontinuités, de telle sorte qu'il résulte au moins deux transitions de la résistance à l'écoulement de l'électrolyte (7) sur le tracé du canal d'écoulement (17).

2. Élément de mélange selon la revendication 1,
dans lequel la réduction du périmètre dans lesdites au moins deux transitions s'étend linéairement sur l'extension longitudinale de l'élément de mélange (1).

3. Élément de mélange selon la revendication 1 ou 2,
dans lequel l'élément de mélange (1) comprend au moins deux canaux d'écoulement minces (40, 50, 43, 44, 53, 54) séparés l'un de l'autre, qui sont reliés au volume commun (13).

4. Élément de mélange selon l'une des revendications précédentes,
dans lequel l'élément de mélange (1) est réalisé sous forme de corps creux fabriqué par moulage par injection avec un mandrin intérieur et un moule extérieur, par un procédé de soufflage ou par un procédé d'emboutissage profond.

5. Élément de mélange selon l'une des revendications précédentes,
dans lequel l'élément de mélange (1) comprend une dépression (15) au moins sur un côté du corps creux, qui s'étend en direction longitudinale de l'élément de mélange (1) et qui est conçue pour recevoir une nervure (6) du boîtier (3) de l'accumulateur (2).

6. Accumulateur (2) pourvu d'un boîtier (3) dans lequel est formée au moins une cellule d'accumulateur (90, 91, 92, 93, 94, 95), la cellule d'accumulateur (90, 91, 92, 93, 94, 95) comprenant une multitude d'électrodes (5) en forme de plaques agencées les unes à côté des autres dans la cellule d'accumulateur, ainsi qu'un électrolyte liquide (7), et au moins un élément de mélange (1) selon l'une des revendications précédentes est agencé en supplément dans un espace libre dans la cellule d'accumulateur (90, 91, 92, 93, 94, 95).

7. Accumulateur selon la revendication 6,
**caractérisé en ce que**
l'élément de mélange (1) est agencé latéralement à côté d'une face plane d'une électrode (5) en forme de plaque dans la cellule d'accumulateur (90, 91, 92, 93, 94, 95).

8. Accumulateur selon la revendication 6 ou 7,
dans lequel l'élément de mélange (1) est agencé entre une électrode (5) en forme de plaque et la paroi du boîtier ou une nervure intérieure (6) formée sur la paroi du boîtier.

9. Accumulateur selon l'une des revendications 6 à 8,
dans lequel le boîtier (3) présente une extension longitudinale (LG) qui est la plus grande valeur parmi les dimensions que sont la hauteur, la largeur et la longueur du boîtier (3), les plaques d'électrode (5) présentent une extension longitudinale (LE) qui est la plus grande valeur parmi les dimensions que sont la hauteur, la largeur et la longueur de la plaque d'électrode individuelle (5), et les plaques d'électrode (5) dans une cellule d'accumulateur (90, 91, 92, 93, 94, 95) sont orientées de telle sorte que l'extension longitudinale (LE) des plaques d'électrode (5) s'étend sensiblement en direction de l'extension longitudinale (LG) du boîtier (3).

10. Accumulateur selon l'une des revendications 6 à 9,
dans lequel l'élément de mélange (1) s'étend vers le haut au moins aussi loin que lors d'une sollicitation en mouvement conforme à la spécification de l'accumulateur (2), un déversement de l'électrolyte liquide (7) au-delà de la zone de bord supérieure de l'élément de mélange (1) est empêché.
